**Europäisches Patentamt**

(19) **European Patent Office**

**Office européen des brevets**

(11) Veröffentlichungsnummer: **0 112 578**

**B1**

(12) **EUROPÄISCHE PATENTSCHRIFT**

(45) Veröffentlichungstag der Patentschrift.
20.05.87

(51) Int. Cl.⁴: **B 23 K 20/08**

(21) Anmeldenummer: **83113122.2**

(22) Anmeldetag: **27.12.83**

(54) **Verfahren zum Explosionsschweissen.**

(30) Priorität: **27.12.82 PL 239805**

(43) Veröffentlichungstag der Anmeldung:
**04.07.84 Patentblatt 84/27**

(45) Bekanntmachung des Hinweises auf die Patenterteilung:
**20.05.87 Patentblatt 87/21**

(84) Benannte Vertragsstaaten:
**CH DE FR GB IT LI SE**

(56) Entgegenhaltungen:
**GB-A-1 584 451**
**US-A-3 728 780**

(73) Patentinhaber: **Instytut Techniki Cieplnej, ul. Dabrowskiego 113, 93- 208 Lodz (PL)**

(72) Erfinder: **Sek, Witold, ul. Sienkiewicza 52 m 19, Lódz (PL)**
Erfinder: **Jakubowski, Krzysztof, ul. Piotrkowska 182 m 35, Lódz (PL)**

(74) Vertreter: **Füchsle, Klaus, Dipl.- Ing., Hoffmann . Eitle & Partner Patentanwälte Arabellastrasse 4, D-8000 München 81 (DE)**

LIBER. STOCKHOLM 1987

## Beschreibung

Die Erfindung betrifft ein Verfahren zum Explosionsschweißen nach dem Oberbegriff des Anspruchs 1. Das erfindungsgemäße Verfahren wird insbesondere bei der Herstellung und bei der Instandsetzung von Mantel-Rohr-Wärmetauschern angewendet.

Die Ausnutzung von Explosivstoffen in Schweißverfahren von Metallen ist bekannt und wird weltweit u.a. beim Explosionsschweißen von Rohren mit Lochplatten für Wärmetauscher angewandt.

Eine umfassende Übersicht des Standes der Technik über die Explosionsschweißung von Metallen gibt der Artikel von B. Crossland "Review of the present State of the Art in Explosive Welding", veröffentlicht in Metals Technology, January 1976.

Die bekannten und bisher angewandten Explosionsschweißverfahren von Werkstoffen können in zwei Gruppen geordnet werden. Die erste Gruppe betrifft ein Explosionsschweißverfahren mit einer parallelen Anfangsstellung der zu verschweißenden Flächen, d.h. einem Anfangs-Neigungswinkel $\alpha = 0$. Die zweite Gruppe betrifft ein Explosionsschweißverfahren, bei dem die zu verschweißenden Flächen einen Anfangs-Neigungswinkel $\alpha > 0$ aufweisen.

Aus der US-A-3 728 780 ist ein Explosionsschweißverfahren der ersten Gruppe mit einem Neigungswinkel $\alpha = 0$ bekannt. Bei diesem Verfahren sind parallel zu einem Grundwerkstück das zu verbindende Werkstück angeordnet. Auf diesem Werkstück befindet sich unter Zwischenschaltung einer Pufferschicht der Sprengstoff. Es ist bei diesem Verfahren möglich, die Detonation sowohl in Richtung einer Durchmesserverkleinerung des Grundwerkstückes laufen zu lassen als auch in Richtung der Vergrößerung des Durchmessers dieses Grundwerkstückes. Unabhängig davon, von welcher Seite der Sprengstoff gezündet wird, stimmt die Projektion der Geschwindigkeit des Kollisionspunktes Vk' mit der Richtung der Geschwidigkeit der Detonation überein. Ferner ist der effektive Zusammenstoßwinkel $\beta$ stets gleich dem dynamischen Schweißwinkel $\delta$, was für eine parallele Anordnung der zu verschweißenden Flächen charakteristisch ist.

Dieses bekannte Verfahren hat jedoch den Nachteil, daß nur Sprengstoffe mit einer Detonationsgeschwindigkeit eingesetzt werden können, die kleiner ist, als die Schallverbreitungsgeschwindigkeit im Metall. Da die Schallverbreitungsgeschwindigkeit der meisten Metalle in der Größenordnung von 3500 bis 5000 m/sec liegt, können nur Sprengstoffe mit einer Detonationsgeschwidigkeit verwendet werden, die kleiner als 4500 m/sec ist. Dies ergibt sich aus der Tatsache, daß die Schweißgeschwindigkeit $V_k$ gleich der Detonationsgeschwindigkeit des eingesetzten Sprengstoffes ist. Ferner ist es nachteilig, daß sich Schwierigkeiten bei der Herstellung der Sprengstoffe mit einem kritischen Durchmesser unter 5 mm ergeben, wenn dieser Sprengstoff die erforderliche Energie bereitstellen soll. Der kritische Durchmesser der bisher angewandten Sprengstoffe mit Detonationsgeschwindigkeiten von 2000 bis 4000 m/sec ist in der Regel größer als 10 mm. Aus diesem Grund ist das bekannte Verfahren dann nicht mehr anwendbar, wenn die Rohre des Wärmetauschers einen Durchmesser aufweisen, der kleiner als 20 mm ist. Dieses bekannte Verfahren ist auch nicht beim Explosionsverschweißen von Mantel-Rohr-Wärmetauschern anwendbar. Üblicherweise beträgt der maximale Spalt zwischen der Außenflache eines zu verschweißenden Rohres und der Lochfläche in einer dicht perforierten Lochplatte eines Wärmetauschers ungefähr 1,5 mm. Damit die Rohrwand bei einem so geringen Abstand die zum Schweißen erforderliche kinetische Energie bis zum Zusammenstoß mit der Lochfläche in der Lochplatte in der Größenordnung von $0,5$ J/mm$^2$ erreicht, ist es notwendig, hochenergetische Sprengstoffe zur Beaufschlagung des Rohres anzuwenden, deren Detonationsgeschwindigkeit selbst bei einem kritischen Durchmesser größer als 5000 m/sec ist.

Aus der GB-A-1 584 451 ist ein Explosionsverfahren der Zweiten Gruppe mit einem Neigungswinkel $\alpha > 0$ bekannt. Bei diesen Verfahren wird in einer konisch ausgebildeten Bohrung eines Grundwerkstückes ein ebenfalls konisch ausgebildetes zu verschweißendes Werkstück eingeführt. Zwischen der Außenfläche des Werkstückes und der konischen Bohrung des Grundwerkstückes ist ein keilförmig sich erweiternder Freiraum ausgebildet. Der Sprengstoff ist auf der Innenfläche des zu verschweißenden Werkstückes angeordnet, wobei zwischen dem Werkstück und dem Sprengstoff eine Pufferschicht zwischengeschaltet sein kann.

Bei diesen Verfahren wird jedoch der Sprengstoff vom geschlossenen Ende des keilförmig sich erweiternden Freiraumes her gezündet. Der Anfang der Explosionswelle beginnt folglich an einer Stelle, an der der Abstand zwischen zu verschweißendem Werkstück und Grundwerkstück am geringsten ist. Aus diesem Grund stimmt die Projektion $V_k'$ der Geschwindigkeit $V_k$ des Kollisionspunktes mit der Richtung der Geschwindigkeit der Detonation D überein. Ferner ergibt sich der effektive Schweißwinkel $\beta$ aus der Summe des Vorneigungswinkels $\alpha$ und des dynamischen Schweißwinkels $\delta$, d.h. $\beta = \alpha + \delta$. Aufgrund der übereinstimmenden Richtung der o.g. Geschwindigkeiten ist es erwünscht, den effektiven Schweißwinkel $\beta$ zu erhöhen.

Dieses bekannte Verfahren hat jedoch die folgenden Nachteile:

Es ist eine arbeitsaufwendige Verbindung der Leitungen eines jeden, innerhalb eines Rohres angeordneten Zünders mit dem Sprengnetz erforderlich. Dies macht es unmöglich, eine Gruppenzündung der Ladungen anzuwenden und erfordert eine Einzelverschweißung der Rohre in der Lochplatte.

Ferner fallen hohe Materialkosten an, da jede Schweißverbindung eines Rohres mit der Lochplatte einen separaten Zünder erfordert, der relativ teuer ist. Außerdem ist es nachteilig, daß das Aufweiten eines zu verschweißenden zylindrischen Rohres auf einen größeren, beispielsweise konischen Durchmesser und das Explosionsschweißen des Rohres mit der Lochplatte in einem Arbeitsgang nicht möglich ist. Vielmehr ist es erforderlich, daß das zu verschweißende Rohr bereits konisch ausgebildet ist.

Aufgabe der Erfindung ist es, die Nachteile des Standes der Technik zu beseitigen und ein verbessertes Verfahren zum Explosionsschweißen zur Verfügung zu stellen.

Diese Aufgabe wird durch die im Patentanspruch angegebenen Merkmale gelöst.

Die Vorteile des erfindungsgemäßen Verfahrens bestehen darin, daß eine einfache Führung des Explosionsschweißens, eine große Leistungsfähigkeit und eine hohe Qualität der Schweißnaht gewährleistet ist. Bei der Durchführung des erfindungsgemäßen Explosionsschweißens können Sprengstoffe mit großen Detonationsgeschwindigkeiten (über 5000 m/s) angewandt werden. Besonders vorzügliche Resultate werden erzielt, wenn das erfindungsgemäße Verfahren beim Schweißen von Rohren mit kleinen Durchmessern in dicht perforierten Lochplatten angewandt wird.

Das erfindungsgemäße Verfahren zum Explosionsschweißen gewährleistet eine verhältnismäßig große geometrische Toleranz bei der Ausführung des Prozesses, niedrige spezifische Materialkosten und niedrigen spezifischen Arbeitsaufwand und gibt die Möglichkeit, in einem Arbeitsgang mittels einer Sprengladung z.B. ein Rohr mit der Lochplatte auf einem größeren Abschnitt, als er der Dicke bzw. dem Durchmesser des Rohres entspricht, bei gleichzeitigem Aufweiten des Rohres über die Dicke der Lochplatte zu verschweißen.

Die erfindungsgemäße Lösung ermöglicht eine gleichzeitige Befestigung von zehn und mehr Rohren im Lochboden eines Wärmetauschers und innerhalb eines Arbeitsganges, der umfaßt:
- Verschweißen der Rohrenden des Heizeinsatzes mit der Bodenlochplatte auf einer Länge, die größer ist als der Durchmesser des Rohres, ·
- Aufweiten des Rohres auf den konischen Durchmesser der Lochplatte.

Das erfindungsgemäße Verfahren zum Explosionsschweißen wird nachstehend anhand eines in der Zeichnung dargestellten Ausführungsbeispieles näher erläutert. Es zeigt:

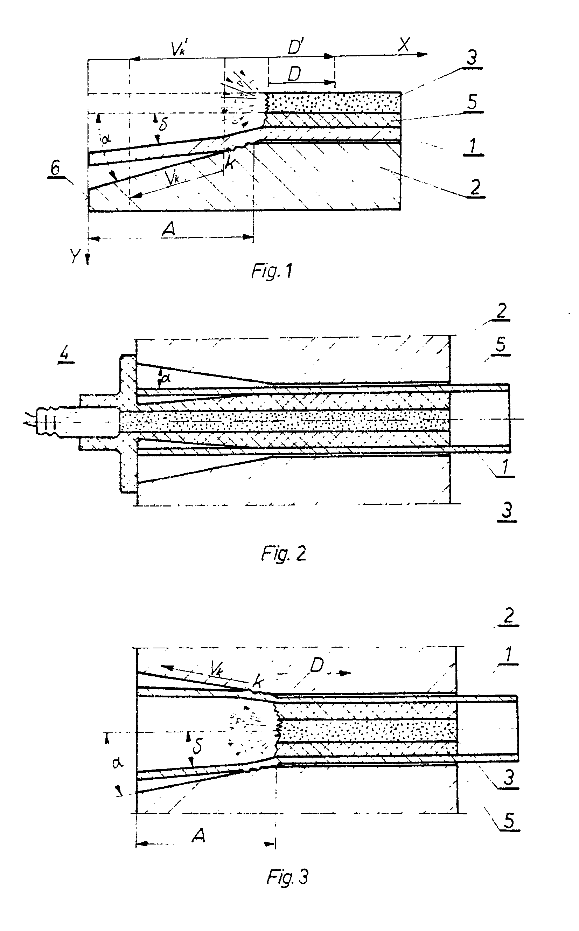

  Fig. 1 das Schema des Verfahrens,
  Fig. 2 und 3 das Verschweißen eines Rohres mit einer Lochplatte.

Der Sprengstoff 3 ist auf die Inertionsschicht 5 aufgebracht und wird in Richtung der X-Achse von der Stirnseite 6 der Grundplatte 2 aus zur Detonation gebracht, wodurch das zu verschweißende Werkstück 1 in Richtung des Grundwerkstückes 2 gedrückt wird. Auf der Strecke A erfolgt das Zusammenschweißen der Stoffe. Die Geometrie des Systems bewirkt, daß auf der Strecke A die Detonationsgeschwindigkeit D des Sprengstoffes 3 entgegengesetzt zur Projektion $V_k'$ der Geschwindigkeit $V_k$ des Kollisionspunktes k der zu verschweißenden Stoffe gerichtet sind.

Beim Explosionsverschweißen des Rohres 1 mit einer Lochplatte 2 wird die Sprengladung koaxial in dem Rohr 1 untergebracht. Der Zünder für die Detonation ist dabei auf der Stirnfläche der Lochplatte 2 angeordnet.

Die Detonation wird durch den Zünder 4 initiiert, und zwar durch individuelle Zündung oder mittels einer Detonationsschnur im Falle von Gruppenladungen. Die Schweißverbindung wird auf der Strecke A erreicht. Die Auswahl des entsprechenden Sprengstoffes 3, der Gestalt des Ladungsgehäuses, welches zugleich die Funktion der Inertionsschicht 5 erfüllt, und des Winkels $\alpha$ des Kegels in der Öffnung der Lochplatte 2, der größer ist als der dynamische Schweißwinkel $\delta$, gewährleisten den erfindungsgemäßen Verlauf der Explosionsschweißung.

**Patentansprüche**

1. Verfahren zum Explosionsschweißen eines Werkstückes (1) auf ein Grundwerkstück (2) längs einer vorbestimmten Strecke,
    bei dem
    die beiden zu verbindenden Flächen der Werkstücke (1, 2) vor deren Verschweißen in einem Neigungswinkel ($\alpha$) zueinander unter Bildung eines keilförmig sich erweiternden Freiraums verlaufen und ein Sprengstoff (3) unter Zwischenschaltung einer Pufferschicht (5) auf dem beim Schweißvorgang auf das Grundwerkstück (2) unter Druck aufzubringenden ersten Werkstück (1) angeordnet ist,
    dadurch gekennzeichnet,
    daß der Sprengstoff (4) vom erweiterten Ende des keilförmigen Freiraumes zwischen den zu verbindenden Flächen der Werkstücke (1 und 2) her gezündet wird, daß der Sprengstoff (3) so ausgewählt wird, daß der dynamische Schweißwinkel ($\delta$), der an dem zu beschießenden Werkstück (1) während der Detonation des Sprengstoffes (3) entsteht, kleiner ist als der Neigungswinkel ($\alpha$),
    daß durch die Zündung des Sprengstoffes (3) vom erweiterten Ende des keilförmigen Freiraumes her und durch die aufeinander abgestimmte Wahl des Sprengstoffes (3), der Form und Größe des keilförmig sich erweiternden Freiraumes zwischen den beiden zu verbindenden Flächen (1, 2) und der Form der Pufferschicht (5), erreicht wird, daß auf der zu verschweißenden Strecke A die Projektion $V_k'$

der Geschwindigkeit $V_k$ des Kollisionspunktes K entgegengesetzt zur Richtung der Geschwindigkeit der Detonation D gerichtet ist.

2. Verfahren nach Anspruch 1, dadurch <u>gekennzeichnet</u>, daß sich beim Explosionsverschweißen eines Rohres (1) in der Bohrung einer Lochplatte (2) der Spalt zwischen dem Rohr (1) und der Bohrung der Lochplatte (2) in der Form eines in Detonationsrichtung zusammenlaufenden Kegels verläuft.

3. Verfahren nach Anspruch 1, dadurch <u>gekennzeichnet</u>, daß verschieden wirkende Sprengstoffe (3) mit unterschiedlichen Parametern auf der zum Explosionsschweißen vorgesehenen Ladungslänge angewandt werden.

## Claims

1. A method of explosive welding of a workpiece (1) onto a base workpiece (2) along a predetermined segment, according to which both surfaces of the workpieces (1, 2) to be joined extend, before they are welded, in an inclined angle ($\alpha$) to each other forming a wedge-shaped widening free space, and an explosive (3) is arranged with a buffer layer (5) therebetween, on the first workpiece (1) which is to be applied to the base workpiece (2) under pressure by the welding process, characterized in that the explosive (4) is ignited from the wide end of the wedged-shaped free space between the two surfaces of the workpieces (1, 2) to be joined, that the explosive (3) is so chosen that the dynamic welding angle ($\delta$), which is formed on the workpiece (1) to be welded on during the detonation of the explosive (3), is smaller than the inclined angle ($\alpha$), that due to the ignition of the explosive (3) from the wide end of the wedged-shaped free space and due to the choice of the following which are matched to each other: the explosive (3), the form and size of the wedged-shaped widening free space between the two surfaces to be joined (1, 2) and the form of the buffer layer (5), it is achieved that on the segment A to be welded the projection $V_k'$ of the velocity $V_k$ of the collision point K is in the opposite sense to the direction of the velocity of the detonation D.

2. Method according to claim 1, characterized in that by explosive welding of a tube (1) in the hole of a perforated plate (2), the gap between the tube (1) and the hole of the perforated plate (2) extends in the form of a cone which tapers in the detonation direction.

3. Method according to claim 1 characterized in that differently effective explosives (3) with differing parameters are employed along the length of the charge provided for explosive welding.

## Revendications

1. Procédé par le soudage par explosion d'une pièce (1) sur une pièce de base (2) le long d'un intervalle prédéterminé,
dans lequel
les deux surfaces, à réunir, des pièces (1, 2) courent, avant leur soudage, sous un angle d'inclinaison ($\alpha$) l'une par rapport à l'autre en formant un espace libre en forme de coin qui va en s'élargissant et
un explosif (3) est disposé, avec interposition d'une couche tampon (5), sur la première pièce (1) qu'il faut appliquer sous pression sur la pièce de base (2) lors du processus de soudage, caractérisé
en ce que l'on met à feu l'explosif (4) à partir de l'extrémité élargie de l'espace libre en forme de coin existant entre les surfaces à reunir des pièces (1 et 2); en ce que l'on choisit l'explosif (3) de façon que l'angle dynamique de soudage ($\delta$), qui apparait sur la pièce (1) à mettre en place à l'explosif pendant la détonation de l'explosif (3), soit inférieur à l'angle d'inclinaison ($\alpha$):
en ce que, du fait de la mise à feu de l'explosif (3) depuis l'extrémité élargie de l'espace libre en forme de coin et du fait du choix, adapté l'un à l'autre, de l'explosif (3), de la forme et de la dimension de l'espace libre en forme de coin qui va en s'élargissant entre les deux surfaces à réunir (1, 2) et du fait de la forme de la couche tampon (5), on obtient que, sur l'intervalle A à souder, la projection $V_k'$ de vitesse $V_k$ du point de collision K est opposée à la direction de la vitesse de la détonation D.

2. Procédé selon la revendication 1, caractérisé
en ce que, lors du soudage par explosion d'un tube (1) dans l'alésage d'une plaque tubulaire (2), la fente entre le tube (1) et l'alésage de la plaque tubulaire (2) a la forme d'un cône qui converge dans la direction de la détonation.

3. Procédé selon la revendication 1, caractérisé
en ce que l'on utilise des explosifs (3) agissant différemment avec des explofis différents sur la longueur de charge prévue pour le soudage par explosion.

Fig. 1

Fig. 2

Fig. 3